# FASCICULE DE BREVET EUROPEEN

(11) **EP 1 136 239 B1**
(45) Date de publication et mention de la délivrance du brevet: **26.10.2005**
(21) Numéro de dépôt: 01400703.3
(22) Date de dépôt: 16.03.2001
(51) Int. Cl.: B29C 70/46, B29C 51/08, B29C 51/32

(54) **Procédé de fabrication d'une pièce en matière plastique renforcée et moule**
Verfahren zur Herstellung eines verstärkten thermoplastischen Werkstücks und Form
Method for producing a reinforced thermoplastic part and mould

(30) Priorité: 20.03.2000 FR 0003530
(43) Date de publication de la demande: 26.09.2001
(73) Titulaire: COMPAGNIE PLASTIC OMNIUM, 69007 Lyon (FR)
(72) Inventeur: Blanchon, Charles-Guillaume, 01100 Oyonnax (FR)
(74) Mandataire: Tanty, François

(56) Documents cités:
- EP-A- 0 416 216
- AU-B- 532 845
- US-A- 2 484 656
- US-A- 4 961 700

## Description

La présente invention concerne un procédé de fabrication, à partir d'une nappe drapable et d'un moule, d'une pièce en matière plastique renforcée.

L'invention concerne plus particulièrement, mais non exclusivement, la fabrication d'une pièce structurelle pour véhicule automobile.

Il est connu d'utiliser des nappes drapables constituées par des tissés de fils de polypropylène et de fibres de verre. Le matériau commercialisé sous la dénomination commerciale TWINTEX par la société VETROTEX en est un exemple.

On connaît par la demande de brevet EP 0 416 216 un procédé de fabrication de panneaux intérieurs de véhicule automobile, ce procédé étant mis en oeuvre dans un moule en deux parties dont l'une porte un presseur.

Il existe un besoin pour réduire la durée des cycles de fabrication des pièces en matière plastique renforcée de façon à obtenir des cadences plus élevées.

L'invention y répond grâce à un nouveau procédé de fabrication, à partir d'une nappe drapable, d'une pièce en matière plastique renforcée au moyen d'un moule comportant une première et une deuxième parties, mobiles l'une par rapport à l'autre, ce procédé étant caractérisé par le fait qu'il comporte les étapes suivantes :
- déposer la nappe sur la première partie du moule ouvert,
- plaquer la nappe contre cette première partie en un ou plusieurs endroits grâce à un ou plusieurs poussoirs montés sur la deuxième partie du moule et mobiles par rapport à cette deuxième partie,
- fermer le moule et compacter la nappe,
- démouler la pièce.

Grâce à l'invention, la nappe drapable est préformée sur l'empreinte du moule d'une manière relativement simple et rapide car les poussoirs utilisés à cet effet sont montés directement sur la deuxième partie du moule.

On peut ainsi éviter d'utiliser des moyens de manipulation extérieurs au moule pour préformer la nappe avant l'étape de compactage.

Avantageusement, la nappe est préchauffée avant d'être placée sur la première partie du moule.

La nappe est avantageusement plaquée contre la première partie du moule d'abord sensiblement au centre de celle-ci, afin de faciliter sa mise en forme.

La nappe peut ainsi être plaquée contre la première partie du moule d'abord au moyen d'un ou plusieurs poussoirs situés sensiblement au centre du moule, puis au moyen d'autres poussoirs, les poussoirs les plus éloignés du centre du moule étant actionnés en dernier.

Il est ainsi plus facile de faire suivre à la nappe les contours de l'empreinte du moule.

De plus, cela permet de réduire le risque de formation de plis indésirables.

Avantageusement, la partie de la nappe dépassant du plan de joint après la fermeture du moule est découpée.

Cette découpe peut être réalisée dès la fermeture du moule, c'est-à-dire sur une nappe chaude, ou après un temps de refroidissement prédéterminé de la nappe.

De préférence, la découpe est réalisée grâce à des moyens de coupe montés sur une lunette mobile par rapport au moule.

La paroi latérale de cette lunette est agencée, dans une réalisation particulière, de façon à constituer avec le moule une chambre de compression, permettant de surmouler de la matière thermoplastique sur la nappe.

L'utilisation d'une telle lunette permet de découper la nappe et de former la chambre de compression en une même opération, ce qui contribue encore à augmenter la cadence de production.

Dans une réalisation particulière, la nappe est surmoulée au moins localement par extrusion de matière thermoplastique avant la fermeture du moule.

En variante, la nappe est surmoulée par injection de matière thermoplastique dans le moule après sa fermeture.

Toujours dans une réalisation particulière, la première partie du moule comporte une ou plusieurs gorges et la deuxième partie du moule comporte une ou plusieurs nervures agencées pour s'engager dans cette ou ces gorges de façon à découper, au moins partiellement, la nappe suivant le contour de la ou des gorges lors de la fermeture du moule.

On peut alors éviter, avec une telle réalisation, d'utiliser une lunette telle que définie ci-dessus.

On peut réaliser en outre un découpage partiel de la pièce à fabriquer, suivant un contour donné, cette pièce étant simplement reliée, à l'ouverture du moule, au reste de la nappe par des ponts de matière pouvant être aisément rompus ou coupés.

Dans une réalisation particulière, la première partie du moule constitue un poinçon avec, en partie supérieure, un renfoncement, de telle sorte que la pièce obtenue présente en section transversale une forme générale de U, la base du U comportant un creux dont la concavité est tournée du côté opposé à celle du U.

Cette forme de poinçon est plus particulièrement adaptée à la réalisation d'une poutre de pare-chocs de véhicule automobile.

Avantageusement, la deuxième partie du moule comporte un ou plusieurs poussoirs agencés pour s'engager dans le renfoncement précité.

La présente invention a également pour objet un moule pour le formage d'une nappe en matière plastique renforcée, comportant une première et une deuxième parties mobiles l'une par rapport à l'autre, caractérisé par le fait qu'il comporte un ou plusieurs poussoirs montés sur la deuxième partie et mobiles par rapport à celle-ci, de manière à plaquer au moins localement ladite nappe contre la première partie, et au moins un moyen de découpe permettant de découper la partie de la nappe dépassant du plan de joint après la fermeture du moule.

La première partie peut comporter un renfoncement et l'un au moins des poussoirs présente avantageusement une extrémité dont le profil correspond sensiblement à la forme de ce renfoncement.

Ainsi, ce poussoir peut participer au compactage de la nappe.

L'une des deux parties du moule peut comporter une ou plusieurs gorges et l'autre partie une ou plusieurs nervures agencées pour s'engager dans cette ou ces gorges de manière à réaliser une découpe partielle de la pièce produite.

L'invention a encore pour objet une pièce en matière plastique renforcée obtenue par la mise en oeuvre du procédé tel que défini plus haut.

Dans le but de mieux faire comprendre l'invention, on va en décrire maintenant des modes de mise en oeuvre, donnés à titre d'exemples non-limitatifs, en référence au dessin annexé, sur lequel :
- les figures 1 à 4 illustrent de manière schématique quatre étapes successives d'un premier exemple de mise en oeuvre de l'invention,
- les figures 5 et 6 illustrent de manière schématique les étapes d'un second exemple de mise en oeuvre de l'invention,
- la figure 7 est une vue schématique en perspective d'une poutre de pare-chocs obtenue grâce au procédé illustré sur les figures 5 et 6,
- la figure 8 illustre un exemple de surmoulage de la nappe drapable avec de la matière thermoplastique, et
- la figure 9 représente schématiquement un moule conforme à l'invention comportant plusieurs poussoirs.

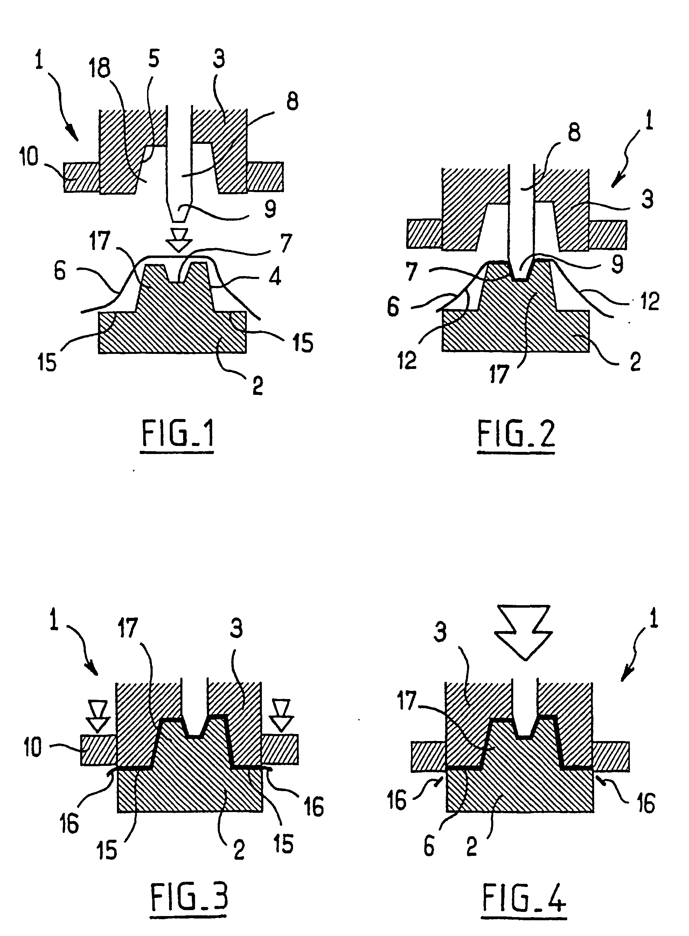

On a représenté sur les figures 1 à 4 un moule 1 selon l'invention, en coupe transversale, comportant une première partie ou partie inférieure 2 et une deuxième partie ou partie supérieure 3, mobiles verticalement l'une par rapport à l'autre.

Les faces en regard 4 et 5 des parties 2 et 3 du moule ont une forme choisie de manière à conférer à une nappe drapable 6, insérée entre elles avant la fermeture du moule, la forme recherchée pour la pièce à fabriquer.

Dans l'exemple de réalisation décrit, le moule 1 utilisé est à plan de joint 15 positif, c'est-à-dire que la nappe drapable 6 est serrée dans le moule 1 avec une force dépendant de la pression exercée par la partie supérieure 3 sur la partie inférieure 2.

Dans l'exemple de réalisation décrit, la face supérieure 4 de la partie inférieure 2 du moule 1 est définie par un poinçon 17 agencé pour s'engager dans une cavité correspondante 18 prévue sur la partie supérieure 3 du moule.

On remarquera à l'examen de la figure 1 que le poinçon 17 ne comporte que des surfaces en dépouille de manière à faciliter l'extraction de la pièce à la réouverture du moule et à assurer également que la nappe 6 soit comprimée entre les deux parties 2 et 3 du moule 1 en tous les points de sa surface.

La face 4 précitée présente en section une forme générale de U dont la concavité est tournée vers le bas, la base du U comportant un renfoncement 7 dont la concavité est tournée vers le haut.

Un poussoir 8 est monté sur la partie supérieure 3 du moule et est mobile verticalement par rapport à celle-ci.

Le poussoir 8 possède une extrémité inférieure 9 ayant sensiblement le même profil que le renfoncement 7.

Ce poussoir 8 s'étend, dans l'exemple décrit, sur toute la longueur du renfoncement 7.

Une lunette 10 comportant des moyens de coupe (non représentés) est montée à l'extérieur de la partie supérieure 3 du moule 1.

La lunette 10 est reliée à des moyens d'entraînement non représentés permettant de la déplacer vers le bas par rapport à la partie supérieure 3 pour couper la partie de la nappe 6 débordant du plan de joint 15.

On va maintenant décrire différentes étapes de la fabrication d'une pièce en matière plastique renforcée à partir de la nappe 6.

Au début du procédé, le moule 1 est en position ouverte, comme représenté sur la figure 1.

La nappe 6 préchauffée est déposée sur la partie inférieure 2 du moule 1 au moyen d'un outil de préhension et de dépose connu en soi et qui n'a pas été représenté dans un souci de clarté du dessin.

Après la dépose de la nappe 6, le poussoir 8 est descendu de sorte que son extrémité inférieure 9 vienne plaquer la nappe 6 contre le renfoncement 7 de la partie inférieure 2, comme illustré sur la figure 2.

Une première mise en forme partielle de la nappe 6 dans le moule 1 est ainsi réalisée.

On fait ensuite descendre la partie supérieure 3 du moule 1 de façon à plaquer l'ensemble de la nappe 6, et notamment ses portions 12 s'étendant au-dessus des flancs du poinçon 17, contre la partie inférieure 2.

La figure 3 représente le moule 1 fermé.

On remarquera que, lors de la descente de la partie supérieure 3 du moule 1, le poussoir 8 reste engagé dans le renfoncement 7.

On descend ensuite la lunette 10 afin de couper la partie périphérique 16 de la nappe 6 dépassant du plan de joint 15, comme illustré sur la figure 4.

On procède alors au compactage de la nappe 6 par serrage des parties inférieure 2 et supérieure 3 du moule 1, en exerçant une pression donnée au moyen de la partie supérieure 3 et du poussoir 8.

On comprend au vu de la description qui vient d'être donnée que les différentes opérations peuvent être enchaînées rapidement dès la dépose de la nappe 6 dans le moule 1.

Il est ainsi possible d'obtenir des cadences élevées de production.

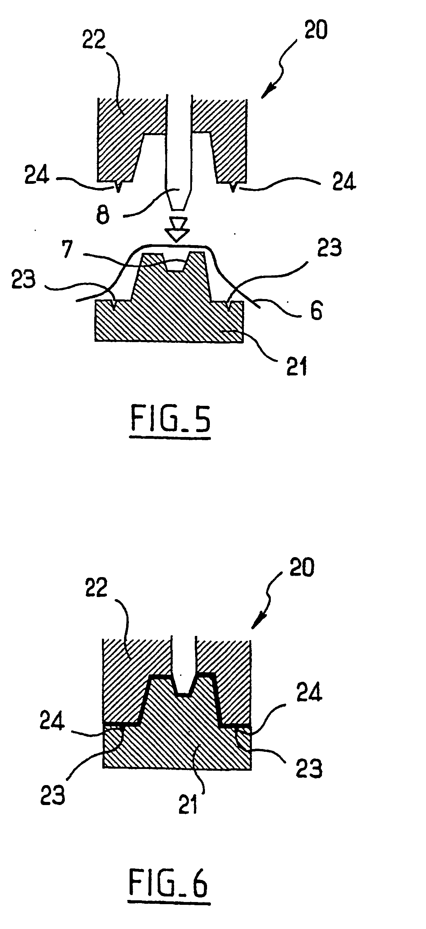

On a représenté sur les figures 5 et 6 un second exemple de mise en oeuvre de l'invention.

Dans cet exemple de mise en oeuvre, le moule 20, représenté en coupe transversale, comporte une partie inférieure 21 et une partie supérieure 22.

La forme générale de l'empreinte du moule 20 est analogue à celle du moule 1 de l'exemple de réalisation précédent.

La partie inférieure 21 du moule 20 diffère de la partie inférieure 2 par le fait qu'elle comporte des gorges 23 disposées sensiblement suivant le contour de la pièce à réaliser.

La partie supérieure 22 du moule diffère de la partie inférieure 1 par le fait qu'elle comporte des nervures 24 aptes à s'engager dans ces gorges 23 lors de la fermeture du moule 20.

Selon ce mode de mise en oeuvre, on plaque la nappe drapable 6 contre la partie inférieure 21 du moule 20 à l'aide du poussoir 8 monté sur la partie supérieure 22 du moule et mobile par rapport à cette dernière, à l'instar de l'exemple de réalisation précédent.

On procède ensuite à la fermeture du moule 20, ce qui conduit à la configuration illustrée sur la figure 6.

Les nervures 24 découpent la nappe 6 suivant un contour prédéterminé en venant s'engager dans les gorges 23.

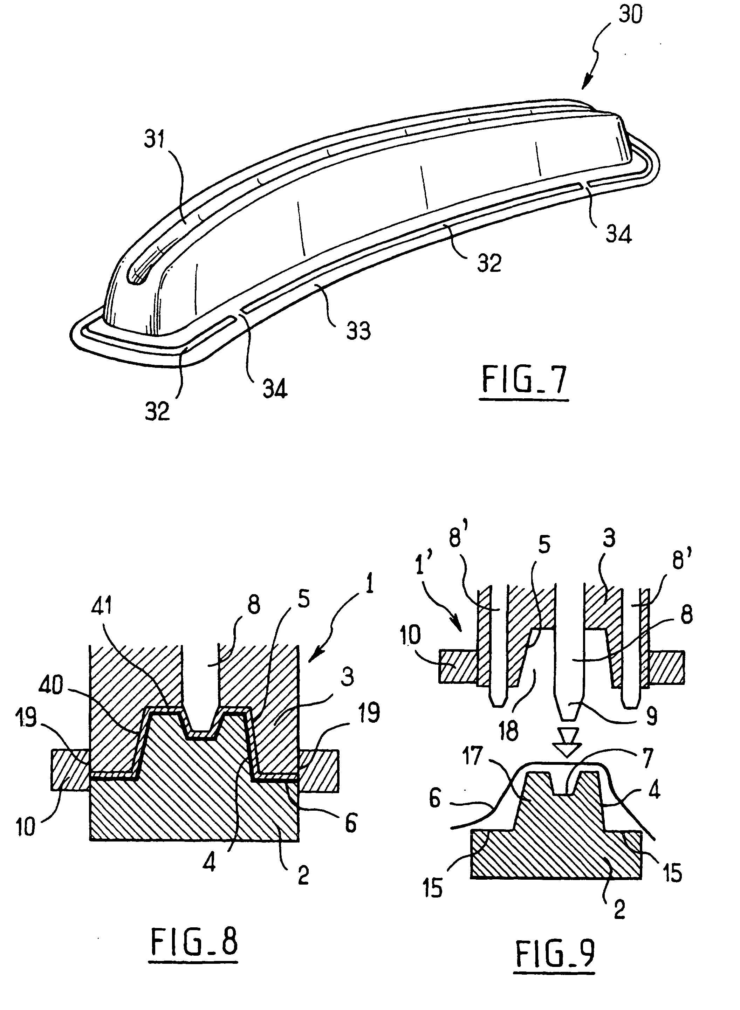

La figure 7 représente en perspective et de manière schématique une pièce 30 obtenue avec le moule 20 qui vient d'être décrit.

La pièce 30 constitue dans l'exemple décrit une poutre de pare-chocs pour véhicule automobile.

Elle présente en section transversale une forme générale de U, la base du U comportant un creux 31 dont la concavité est tournée du côté opposé à la concavité du U.

Ce creux 31 correspond au renfoncement 7.

On peut voir que les nervures 24 et les gorges 23 ont permis de réaliser un pré-découpage de la pièce, résultant en des découpes 32.

L'entourage 33 de la pièce 30 n'est relié à cette dernière qu'au moyen de ponts de matière 34 s'étendant entre les découpes 32, faciles à couper.

On peut utiliser la lunette 10 pour former une chambre de compression 40 avec les parties supérieure 3 et inférieure 2 du moule, comme cela va être décrit en référence à la figure 8.

Plus précisément, on ménage un intervalle entre les parties supérieure 3 et inférieure 2 du moule au-dessus de la nappe 6 et l'on positionne la surface intérieure 10 de la lunette 19 au niveau de cet intervalle, pour le fermer.

Un canal d'injection de matière thermoplastique sous pression, non représenté, permet d'injecter une certaine quantité 41 de matière thermoplastique dans le moule au contact de la nappe 6, dans l'intervalle précité, afin de réaliser des nervures de rigidification par exemple.

En variante, le moule ne comporte pas de canal d'injection et la matière thermoplastique est déposée dans le moule par extrusion avant sa fermeture.

Dans ce cas, c'est le serrage des deux parties du moule qui assure l'étalement de la matière dans le moule.

Dans les exemples de réalisation qui viennent d'être décrits, la nappe drapable 6 est constituée par une nappe de TWINTEX.

Bien entendu, on peut utiliser sans sortir du cadre de l'invention d'autres matériaux sous forme de nappe, capables de conduire au même résultat ou à un résultat similaire.

Les modes de réalisation qui viennent d'être décrits ne présentent aucun caractère limitatif.

Il est notamment possible de monter d'autres poussoirs sur le moule.

Par exemple, on a représenté sur la figure 9 un moule 1' se différenciant du moule 1 par le fait qu'il comporte des poussoirs périphériques supplémentaires 8' disposés de part et d'autre du poussoir central 8.

Pour mettre en forme partiellement la nappe 6, on fait d'abord descendre le poussoir central 8 puis les poussoirs périphériques 8'.

L'utilisation de plusieurs poussoirs, comme cela vient d'être décrit, est particulièrement avantageuse lorsque la géométrie de la pièce à realiser est complexe.

## Revendications

1. Procédé de fabrication, à partir d'une nappe drapable (6), d'une pièce en matière plastique renforcée, notamment une pièce structurelle de véhicule automobile, au moyen d'un moule (1 ; 20) comportant une première et une deuxième parties (2 ; 21 ; 3 ; 22), mobiles l'une par rapport à l'autre, **caractérisé par le fait qu'**il comporte les étapes suivantes :
- déposer la nappe sur la première partie (2 ; 21) du moule ouvert, la première partie (2 ; 21) constituant un poinçon (17) avec, en partie supérieure, un renfoncement (7), de telle sorte que la pièce obtenue (30) présente en section transversale une forme générale de U, la base du U comportant un creux (31) dont la concavité est tournée du côté opposé à celle du U.
- plaquer la nappe (6) contre cette première partie (2 ; 21) en un ou plusieurs endroits grâce à un ou plusieurs poussoirs (8) montés sur la deuxième partie (3 ; 22) du moule et mobiles par rapport à cette deuxième partie, la deuxième partie (3 ; 22) du moule comportant un ou plusieurs poussoirs (8) agencés pour s'engager dans le renfoncement (7) de la première partie.
- fermer le moule (1 ; 20), une partie de la nappe dépassant du plan de joint après la fermeture du moule,
- compacter la nappe (6),
- découper la partie de la nappe (16) dépassant du plan de joint (15),
- démouler la pièce.

2. Procédé selon la revendication précédente, **caractérisé par le fait que** la nappe (6) est préchauffée avant sa mise en place dans le moule.

3. Procédé selon l'une des deux revendications précédentes, **caractérisé par le fait que** la nappe (6) est plaquée contre la première partie (2 ; 21) du moule d'abord sensiblement au centre de celle-ci.

4. Procédé selon la revendication précédente, **caractérisé par le fait que** la nappe (6) est plaquée contre la première partie (2 ; 21) du moule d'abord au moyen d'un ou plusieurs poussoirs (8) situés sensiblement au centre du moule (1 ; 20), puis progressivement au moyen d'autres poussoirs, les poussoirs les plus éloignés du centre du moule étant actionnés en dernier.

5. Procédé selon l'une quelconque des revendications précédentes, **caractérisé par le fait que** la découpe est réalisée grâce à des moyens de coupe montés sur une lunette (10).

6. Procédé selon la revendication précédente, **caractérisé par le fait que** la paroi latérale intérieure (19) de la lunette est agencée de façon à constituer avec le moule une chambre de compression (40) et **par le fait que** l'on surmoule de la matière thermoplastique (41) sur la nappe (6) dans ladite chambre de compression (40).

7. Procédé selon la revendication précédente, **caractérisé par le fait que** l'on dépose de la matière thermoplastique par extrusion sur la nappe (6) avant la fermeture du moule (1).

8. Procédé selon la revendication 6, **caractérisé par le fait que** la nappe (6) est surmoulée par injection de matière thermoplastique dans le moule après sa fermeture.

9. Procédé selon l'une quelconque des revendications précédentes, **caractérisé par le fait que** la première partie (21) du moule comporte une ou plusieurs gorges (23) et la deuxième partie (22) du moule comporte une ou plusieurs nervures (24) agencées pour s'engager dans cette ou ces gorges (23), de façon à couper, au moins partiellement, la nappe (6) suivant le contour de la ou des gorges (23) lors de la fermeture du moule (20). .

10. Moule pour le formage d'une nappe en matière plastique renforcée, comportant une première et une deuxième parties (2 ; 21 ; 3 ; 22), mobiles l'une par rapport à l'autre, **caractérisé par le fait qu'**il comporte un ou plusieurs poussoirs (8) montés sur la deuxième partie (3 ; 22) et mobiles par rapport à cette partie de manière à plaquer au moins localement ladite nappe sur la première partie (2 ; 21) avant la fermeture du moule (1 ; 20) et au moins un moyen de découpe permettant de découper la partie de la nappe dépassant du plan de joint après la fermeture du moule, la première partie (2 ; 21) constituant un poinçon (17) avec, en partie supérieure, un renfoncement (7), de telle sorte que la pièce obtenue (30) présente en section transversale une forme générale de U, la base du U comportant un creux (31) dont la concavité est tournée du côté opposé à celle du U et la deuxième partie (3 ; 22) du moule comportant un ou plusieurs poussoirs (8) agencés pour s'engager dans le renfoncement (7) de la première partie.

11. Moule selon la revendication 10, **caractérisé par le fait que** l'une des deux parties du moule comporte une ou plusieurs gorges (23) et l'autre partie une ou plusieurs nervures (24) agencées pour s'engager dans cette ou ces gorges (24) de manière à réaliser une découpe partielle de la pièce produite.

12. Pièce en matière plastique renforcée obtenue par la mise en oeuvre du procédé tel que défini dans l'une quelconque des revendications 1 à 9.

## Claims

1. A method of manufacturing a reinforced plastics material part, in particular a structural part of a motor vehicle, from a sheet (6) of drapable material by using a mold (1; 20) comprising first and second mold portions (2; 21; 3; 22) that are movable relative to each other, **characterized by** the fact that the method comprises the following steps:
. placing the sheet on the first portion of the open mold, the first portion (2; 21) constituting a die (17) having a setback (7) in its top portion such that the resulting part (30) is of generally U-section, with the base of the U-section having an indentation whose concave side faces in the opposite direction to the concave side of the U-section;
. pressing the sheet (6) against the first portion (2; 21) at one or more locations by means of one or more pushers (8) mounted on the second portion (3; 22) of the mold and movable relative to said second portion, the second mold portion having one or more pushers (8) arranged to engage in the setback (7) of the first portion;
. closing the mold (1; 20), a portion of the sheet projecting from the join plane after the mold has closed;
. compacting the sheet (6);
. trimming off the portion of the sheet (16) that projects from the join plane; and
. unmolding the part.

2. A method according to the preceding claim, **characterized by** the fact that the sheet (6) is preheated before being placed in the mold.

3. A method according to one of the preceding claims, **characterized by** the fact that the sheet (6) is pressed against the first portion (2; 21) of the mold initially substantially in the center thereof.

4. A method according to the preceding claim, **characterized by** the fact that the sheet (6) is pressed against the first portion (2; 21) of the mold initially by means of one or more pushers (8) situated substantially in the center of the mold, and then progressively by means of other pushers, the pushers furthest from the center of the mold being actuated last.

5. A method according to any preceding claim, **characterized by** the fact that trimming is performed by blades mounted on a cursor (10).

6. A method according to the preceding claim, **characterized by** the fact that the inside wall (19) of the cursor is arranged so as to co-operate with the mold to form a compression chamber (40), and by the fact that thermoplastics material (41) is overmolded on the sheet inside said compression chamber.

7. A method according to the preceding claim, **characterized by** the fact that the thermoplastic material is deposited by being extruded on the sheet before the mold (1) is closed.

8. A method according to claim 6, **characterized by** the fact that the sheet is overmolded by injecting thermoplastics material into the mold after the mold has been closed.

9. A method according to any preceding claim, **characterized by** the fact that the first mold portion (21) has one or more grooves (23) and the second mold portion has one or more ribs (24) arranged to engage in said groove(s), so as to trim the sheet at least in part around the outline of the groove(s) when the mold is closed.

10. A mold for forming a sheet of reinforced plastics material, the mold comprising first and second portions (2; 21; 3; 22) that are movable relative to each other, one or more pushers (8) mounted on the second portion and movable relative thereto so as to press said sheet at least locally against the first portion (2; 21) before the mold is closed, and at least one trimmer means enabling the portion of the sheet that projects from the join plane to be trimmed off once the mold is closed, the first portion (2; 21) constituting a die (17) having a setback (7) in its top portion such that the resulting part (30) is of generally U-section, with the base of the U-section having an indentation whose concave side faces in the opposite direction to the concave side of the U-section and the second mold portion having one or more pushers (8) arranged to engage in the setback (7) of the first portion.

11. A mold according to claim 10, **characterized by** the fact that one of the two mold portions has one or more grooves (23) and the other portion has one or more ribs (24) arranged to engage in said groove(s) so as to perform partial trimming of the part that is produced.

12. A reinforced plastics material part obtained by performing the method according to any one of claims 1 to 9.

## Patentansprüche

1. Verfahren zur Herstellung eines aus verstärktem Kunststoff bestehenden Werkstücks, insbesondere eines Bauteils eines Kraftfahrzeugs, aus einer drapierbaren Matte (6) mittels einer Form (1; 20) umfassend einen ersten und einen zweiten Teil (2; 21; 3; 22), die relativ zueinander beweglich sind, **dadurch gekennzeichnet, dass** es folgende Schritte aufweist:
- Einlegen der Matte in den ersten Teil (2; 21) der geöffneten Form, wobei der erste Teil (2; 21) in seinem oberen Bereich einen Stempel (17) mit einer Vertiefung (7) bildet, so dass das erzeugte Werkstück (30) einen im Allgemeinen U-förmigen Querschnitt aufweist, bei dem der Steg des U eine Mulde (31) aufweist, deren Konkavität der Seite zugewandt ist, die dem U gegenüberliegt,
- Andrücken der Matte (6) gegen diesen ersten Teil (2; 21) in einem oder mehreren Bereichen mittels eines oder mehrerer Stößel (8), der bzw. die an dem zweiten Teil (3; 22) der Form relativ zu diesem zweiten Teil beweglich angebracht ist bzw. sind, wobei der zweite Teil (3; 22) der Form einen oder mehrere Stößel (8) aufweist, die derart angeordnet sind, dass sie in die Vertiefung (7) in dem ersten Teil eingreifen,
- Schließen der Form (1; 20), wobei ein Teil der Matte nach dem Schließen der Form von der Trennebene übersteht,
- Verdichten der Matte (6),
- Abschneiden des Teils der Matte (16), der von der Trennebene (15) übersteht,
- Entformen des Teils.

2. Verfahren nach dem vorangegangenen Anspruch, **dadurch gekennzeichnet, dass** die Matte (6) vor ihrem Einlegen in die Form vorgewärmt wird.

3. Verfahren nach einem der beiden vorangegangenen Ansprüche, **dadurch gekennzeichnet, dass** die Matte (6) gegen den ersten Teil (2; 21) der Form, zunächst im Wesentlichen in der Mitte derselben, angedrückt wird.

4. Verfahren nach dem vorangegangenen Anspruch, **dadurch gekennzeichnet, dass** die Matte (6) gegen den ersten Teil (2; 21) der Form zunächst mittels eines bzw. mehrerer im Wesentlichen in der Mitte der Form (1; 20) befindlicher Stößel (8), und dann allmählich mittels weiterer Stößel angedrückt wird, wobei die Stößel, die am Weitesten von der Mitte der Form entfernt sind, zuletzt betätigt werden.

5. Verfahren nach einem der beiden vorangegangenen Ansprüche, **dadurch gekennzeichnet, dass** das Abschneiden durch an einem Setzstock (10) angebrachte Schneidemittel erfolgt.

6. Verfahren nach dem vorangegangenen Anspruch, **dadurch gekennzeichnet, dass** die innere Seitenwand (19) des Setzstocks derart angeordnet ist, dass sie zusammen mit der Form eine Druckkammer (40) bildet und dass in dieser Druckkammer (40) ein Thermoplast (41) auf die Matte (6) abgegossen wird.

7. Verfahren nach dem vorangegangenen Anspruch, **dadurch gekennzeichnet, dass** Thermoplast vor dem Schließen der Form (1) durch Extrusion auf die Matte (6) aufgebracht wird.

8. Verfahren nach Anspruch 6, **dadurch gekennzeichnet, dass** Thermosplast nach dem Schließen der Form in diese eingespritzt wird und somit auf die Matte (6) aufgebracht wird.

9. Verfahren nach einem der vorangegangenen Ansprüche, **dadurch gekennzeichnet, dass** der erste Teil (21) der Form eine bzw. mehrere Nuten (23) und der zweite Teil (22) der Form eine bzw. mehrere Rippen (24) aufweist, wobei die Rippen derart angeordnet sind, dass sie in diese Nut bzw. Nuten (23) eingreifen und somit beim Schließen der Form (20) zumindest teilweise die Matte (6) entlang der Kontur der Nut bzw. Nuten (23) abschneiden.

10. Form zum Formen einer Matte aus verstärktem Kunststoff, umfassend einen ersten und einen zweiten Teil (2; 21; 3; 22), die relativ zueinander beweglich sind, **dadurch gekennzeichnet, dass** sie einen bzw. mehrere am zweiten Teil (3; 22) angebrachte Stößel (8) aufweist, die derart beweglich relativ zu diesem Teil gelagert sind, dass sie zumindest bereichsweise die Matte gegen den ersten Teil (2; 21) andrücken, bevor die Form (1; 20) geschlossen wird, und dass sie mindestens ein Schneidemittel aufweist, mit dem der Teil der Matte, der aus der Trennebene übersteht, nach dem Schließen der Form abgeschnitten werden kann, wobei der erste Teil (2; 21) einen Stempel (17) mit einer Vertiefung (7) in seinem oberen Bereich bildet, so dass das erzeugte Werkstück (30) einen im Allgemeinen U-förmigen Querschnitt aufweist, bei dem der Steg des U eine Mulde (31) aufweist, deren Konkavität der Seite zugewandt ist, die dem U gegenüberliegt, und der zweite Teil (3; 22) der Form einen oder mehrere Stößel (8) aufweist, die derart angeordnet sind, dass sie in die Vertiefung (7) in dem ersten Teil eingreifen.

11. Form nach Anspruch 10, **dadurch gekennzeichnet, dass** der eine Teil der Form eine bzw. mehrere Nuten (23) und der andere eine bzw. mehrere Rippen (24) aufweist, wobei die Rippen derart angeordnet sind, dass sie in diese Nut bzw. Nuten (24) derart eingreifen, dass sie das erzeugte Werkstück teilweise ausschneiden.

12. Werkstück aus verstärktem Kunststoff, erzeugt nach dem Verfahren nach einem der Ansprüche 1 bis 9.
